## Europäisches Patentamt

## European Patent Office

## Office européen des brevets

(11) Numéro de publication: **0 146 776**
**B1**

(12) **FASCICULE DE BREVET EUROPEEN**

(45) Date de publication du fascicule du brevet: **17.10.90**

(21) Numéro de dépôt: **84113936.3**

(22) Date de dépôt: **17.11.84**

(51) Int. Cl.⁵: **B 60 B 21/12, B 60 C 15/028**

(54) **Dispositif de blocage des bourrelets d'une enveloppe de pneumatique.**

(30) Priorité: **07.12.83 FR 8319522**

(43) Date de publication de la demande:
**03.07.85 Bulletin 85/27**

(45) Mention de la délivrance du brevet:
**17.10.90 Bulletin 90/42**

(84) Etats contractants désignés:
**AT BE CH DE GB IT LI LU NL SE**

(56) Documents cités:
**EP-A-0 084 490**
**FR-A-2 271 945**
**FR-A-2 290 318**
**FR-A-2 298 447**
**FR-A-2 311 667**
**FR-A-2 331 456**
**US-A-2 857 951**

(73) Titulaire: **MICHELIN & CIE (Compagnie Générale des Etablissements Michelin) Société dite:**
**4 rue du Terrail**
**F-63000 Clermont-Ferrand (FR)**

(72) Inventeur: **Bouchereau, Philippe**
**23 avenue de Grande-Bretagne**
**F-63000 Clermont-Ferrand (FR)**
Inventeur: **Susini, Pierre**
**45 rue Chateaubriand**
**F-63000 Clermont-Ferrand (FR)**

(74) Mandataire: **Renaudie, Jacques et al**
**Michelin & Cie Service K. Brevets**
**F-63040 Clermont-Ferrand Cédex (FR)**

Courier Press, Leamington Spa, England.

## Description

La présente invention a pour objet un dispositif de blocage des bourrelets d'une enveloppe de pneumatique sur leurs sièges, destiné à améliorer les performances des roulages à pression réduite; elle concerne les ensembles pneumatiques utilisant une jante dont un bord latéral au moins est démontable ou une jante en deux parties, ou bien encore une jante à sectures multiples.

Pour certains roulages, il est nécessaire de réduire considérablement la pression de gonflage des pneumatiques. Il en est ainsi en terrains mous, marécageux ou sabloneux. Dans ce cas, les bourrelets sont insuffisamment bloqués sur leurs sièges. On risque un décoincement d'un (des) bourrelet(s) qui quitte(nt) brutalement le rebord de jante pour se rapprocher axialement vers l'intérieur de la jante. Pour les ensembles montés sans chambre à air indépendante, il en résulte une brutale perte de pression résiduelle, donc une mise à plat instantanée du pneumatique. Pour les montages avec chambre à air, de tels déplacements de bourrelets sont également intolérables car il provoquent une détérioration rapide de la chambre. On peut encore mentionner un autre inconvénient rencontré dans ces roulages à basse pression: la perte accidentelle de motricité due à une rotation de l'enveloppe sur sa jante, qui peut d'ailleurs aussi aboutir à une mise à plat du pneumatique.

Pour pallier ces inconvénients, on a eu l'idée de monter, sur la jante et entre les bourrelets, un anneau empêchant ces derniers de se rapprocher. Cependant, pour être efficaces, de tels anneaux doivent être rigides; ils sont en général constitués de caoutchouc de dureté très grande, éventuellement armé de tringles ou renforcé par des câbles. La demande de brevet EP 0 084 490 décrit un de ces dispositifs constitués par un anneau contenant une armature de renforcement. Le brevet FR 1 173 895 montre une autre forme de réalisation d'un anneau de retenue des bourrelets, conçu spécialement pour les jantes à bord latéral démontable. De tels anneaux doivent être introduits dans l'enveloppe entre les bourrelets avant de monter l'ensemble sur la jante, ce qui est difficile parce que ces anneaux sont lourds, massifs et fort peu flexibles.

Le but de la présente invention est de proposer un dispositif de forme annulaire maintenant les bourrelets appliqués contre les rebords de jante, qui sont très facile à monter, sans matériel particulier, qui soit utilisable avec ou sans chambre à air, qui ne nécessite aucune transformation des jantes démontables existantes, et qui soit compatible avec les enveloppes habituellement utilisées sur ces jantes.

Selon l'invention, le dispositif annulaire présente une très faible rigidité à la flexion dans le sens circonférentiel, afin de pouvoir être ovalisé facilement pour favoriser le montage, tout en ayant une très grande rigidité à la flexion dans le sens axial pour ne pas de déformer par flambement sous l'effet d'une compression axiale, donc pour ne pas compromettre son efficacité.

Le dispositif de blocage des bourrelets d'une enveloppe de pneumatique montée sur une jante démontable, selon l'invention, comportant un premier élément constitué essentiellement d'un matériau de dureté Shore A inférieure à 85 et de forme approximativement cylindrique dont les extrémités axiales sont destinées à retenir axialement les bourrelets d'une enveloppe de pneumatique,

ledit premier élément (5) étant ceinturé par un second élément pouvant contenir l'expansion radiale de ce premier élément

et dont le module d'élasticité apparent est supérieur à 45 000 Mega Pascal, est caractérisé en ce que

ledit second élément est une virole continue distincte du premier élément dont la largeur axiale est, en position de montage, inférieure à la largeur axiale maximale du premier élément et en ce que le premier élément est fendu transversalement.

A titre illustratif, cette ceinture peut être une virole d'acier, mince pour pouvoir être facilement introduite dans l'enveloppe de pneumatique par ovalisation, mais cependant capable de contenir le fluage du caoutchouc.

Suivant un mode de réalisation préférentiel, le premier élément présente une section méridienne en forme de U. Chaque extrémité axiale s'étendant radialement vers l'extérieur retient un bourrelet de l'enveloppe. La ceinture est disposée entre chacune de ces extrémités axiales. Cette disposition est particulièrement avantageuse pour assurer un cetrage précis et facile des deux éléments l'un par rapport à l'autre.

Les figures suivante illustrent un exemple de réalisation préférable mais non limitatif de l'invention;
—la figure 1 est une vue partielle d'une coupe transversale d'un ensemble pneumatique où apparît un dispositif selon l'invention;
—la figure 2 est un détail d'une coupe transversale d'un dispositif selon l'invention;
—la figure 3 est une coupe longitudinale du même dispositif.

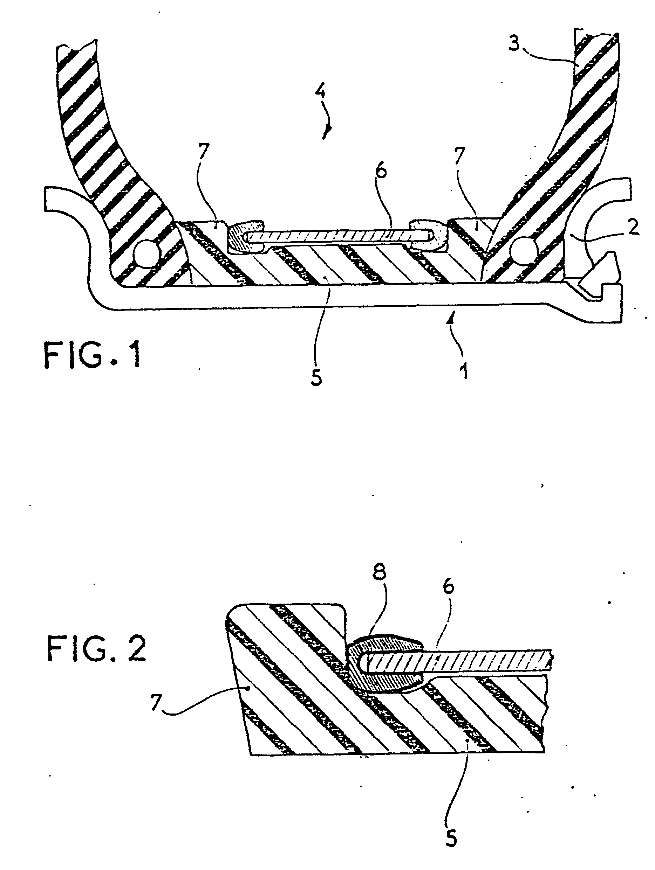

L'ensemble pneumatique schématisé à la figure 1 comporte une jante (1) dont un bord (2) est démontable, une enveloppe (3) et un dispositif (4) selon l'invention pour maintenir les bourrelets appliqués contre les rebords de jante même pendant des roulages à basse pression.

Le dispositif (4) comporte un premier élément (5) en caoutchouc de dureté Shore A de préférence comprise entre 50 et 65 (norme ASTM D 2240), dont la section transversale présente une forme en U, et un second élément ou ceinture (6) formant entretoise entre les bords (7) s'étendant radialement vers l'extérieur. De préférence, le premier élément (5) doit occuper tout l'espace entre la jante et la ceinture (6).

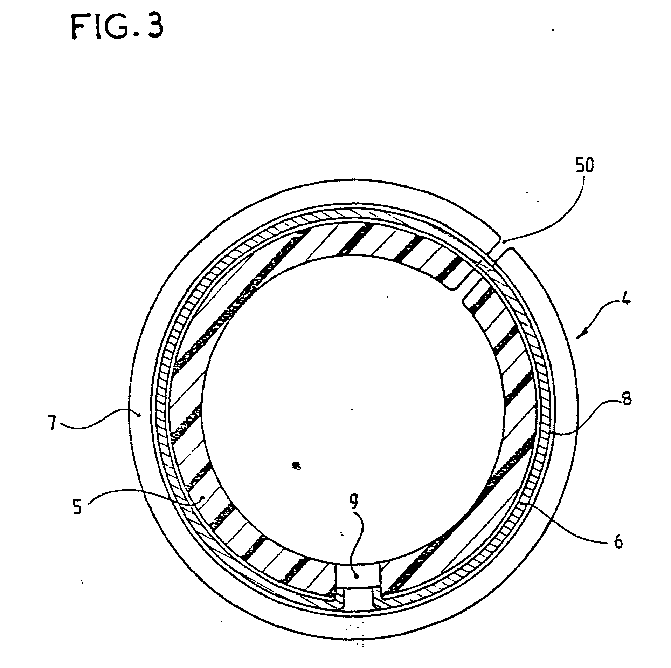

Les bords de la ceinture (6) sont avantageusement munis d'un protecteur (8) afin de ne pas endommager le caoutchouc du premier élément (5) au niveau des bords (7). Quant à la ceinture (6), elle peut être réalisée de différentes manières pourvu qu'elle puisse contenir l'expansion radiale de l'élément en caoutchouc (5). Dans cet exemple, la ceinture est réalisée en acier, de module d'élasticité égal à 190 000 Mega Pascal. De préférence, l'anneau (5) est fendu transversalement en (50) comme on le voit sur la figure 3. Cette disposition particulière est très intéressante car la pièce de caoutchouc (5) peut être préparée sous forme de bande continue, à plat, puis coupée à la longueur voulue selon la dimension de l'ensemble pneumatique à équiper. Grâce à sa flexibilité, à sa faible épaisseur, cette pièce est très facilement introduite à l'intérieur de la ceinture (6) pour former un anneau de caoutchouc.

De manière connue en soi, on peut bien sûr munir le dispositif (4) d'un trou radial (9) afin d'assurer un passage pour la valve d'une chambre, ou pour l'air dans le cas d'un montage sans chambre à air. Le gonflage d'ensembles pneumatiques munis de tels dispositifs est un problème bien connu dans l'étapt de la technique et l'homme du métier peut facilement adopter tout moyen connu approprié.

La description qui vient d'être faite et les dessins s'y rapportant illustrent un dispositif de blocage des bourrelets particulier et donnant d'excellents résultats.

On peut facilement prévoir différentes réalisation de l'invention, suivant que l'on recherche une efficacité maximale, une grande facilité de montage, ou un stockage simplifié. Ainsi le premier élément (5) peut être divisé en plusieurs pièces radialement et/ou axialement et/ou circonférentiellement. Il peut être réalise en polyuréthane. La ceinture peut aussi être réalisée en plusieurs matériaux, pourvu que le module apparent soit supérieur à 45 000 Mega Pascal.

Elle peut encore être établie par enroulage en plusieurs spires d'un feuillard mince, maintenu enroulé pour tout moyen, par exemple un ou des cerclages. Des matériaux utilisables sont l'aluminium, le magnésium, les alliages légers, la fibre de verre, l'aramide, les matériaux composites.

Les diverses configurations utilisant, comme expliqué, deux pièces principales ayant des rôles différents et constituées pour l'essentiel de matériaux ayant des propriétés différentes entrent dans le cadre de la présente invention.

**Revendications**

1. Dispositif (4) de blocage des bourrelets d'une enveloppe de pneumatique montée sur une jante démontable, comportant un premier élément (5) constitué essentiellement d'un matériau de dureté Shore A inférieure à 85 et de forme approximativement cylindrique dont les extrémités axiales sont destinées à retenir axialement les bourrelets d'une enveloppe de pneumatique, ledit premier élément (5) étant ceinturé par un second élément (6) pouvant contenir l'expansion radiale de ce premier élément (5)

et dont le module d'élasticité apparent est supérieur à 45 000 Mega Pascal, caractérisé en ce que

ledit second élément (6) est une virole continue distincte du premier élément

dont la largeur axiale est, en position de montage, inférieure à la largeur axiale maximale du premier élément (5) et en ce que le premier élément (5) est fendu transversalement.

2. Dispositif selon la revendication 1 caractérisé en ce que le premier élément (5) présente une section méridienne de forme en U dont les extrémités axiales (7), s'étendant radialement vers l'extérieur, retiennent axialement chacune un bourrelet de l'enveloppe de pneumatique.

3. Dispositif selon les revendications 1 et 2, caractérisé en ce que le premier élément (5) comprend au moins deux pièces.

4. Dispositif selon l'une quelconque des revendications 1 à 3, caractérisé en ce que le second élément (6) est en enroulage en plusieurs spires d'un feuillard mince maintenu enroulé.

5. Dispositif selon la revendication 4, caractérisé en ce que le feuillard mince est maintenu enroulé par au moins un cerclage.

6. Dispositif selon l'une quelconque des revendications 1 à 5, caractérisé en ce que le premier élément (5) est constitué essentiellement d'un matériau du dureté Shore A inférieure à 70.

7. Dispositif selon l'une quelconque des revendications 1 à 6, caractérisé en ce que le premier élément (5) est constitué essentiellement d'un matériau de dureté Shore A comprise entre 50 et 65.

**Patentansprüche**

1. Blockiervorrichtung für die Wülste eines auf einer zerlegbaren Felge montierten Luftreifens, umfassend ein erstes Element (5), das im wesentlichen aus einem Material mit einer Härte Shore A unter 85 besteht und annähernd zylindrische Form aufweist, wobei dessen axiale Enden dazu bestimmte sind, die Wülste einer Luftreifenhülle axial zu halten,

wobei das erste Element (5) durch ein zweites Element (6) umgürtet wird, das in der Lage ist, die radiale Ausdehnung des ersten Elementes (5) zurückzuhalten,

und dessen Elastizitätsmodul größer 45.000 Megapascal ist,

dadurch gekennzeichnet, daß

das zweite Elemente (6) ein durchgehender Ring ist, der mit dem ersten Element nicht verbunden ist,

dessen axiale Breite in montierter Lage kleiner als die maximale axiale Breite des ersten Elementes (5) ist, und dadurch, daß das erste Element (5) transversale geschlitzt ist.

2. Vorrichtung nach Anspruch 1, dadurch gekennzeichnet, daß das erste Element (5) einen U-förmigen Meridianquerschnitt aufweist, dessen axiale Enden (7) sich radial nach außen erstrecken und jeweils einen Luftreifenhüllenwulst axial halten.

3. Vorrichtung nach den Ansprüchen 1 und 2, dadurch gekennzeichnet, daß das erste Element (5) zumindest zwei Teile umfaßt.

4. Vorrichtung nach einem der Ansprüche 1 bis 3, dadurch gekennzeichnet, daß das zweite Element (6) eine Rolle aus mehreren Windungen eines dünnen aufgerollten Blattes ist.

5. Vorrichtung nach Anspruch 4, dadurch gekennzeichnet, daß das dünne Blatt durch zumindest eine Cerclage eingerollt gehalten wird.

6. Vorrichtung nach einem der Ansprüche 1 bis 5, dadurch gekennzeichnet, daß das erste Element (5) im wesentlichen aus einem Material mit einer Härte Shore A kleiner 70 besteht.

7. Vorrichtung nach einem der Ansprüche 1 bis 6, dadurch gekennzeichnet, daß das erste Element (5) im wesentlichen aus einem Material mit einer Härte Shore A zwischen 50 und 65 besteht.

**Claims**

1. A device (4) for locking beads of a tire mounted on a demountable rim comprising a first part (5) being forced essentially of a flexible material of a Shore A hardness of less than 85, and having an approximately cylindrical shape with axial ends engageable against the beads for retention of the beads, said first part (5) being strapped by a second element (6) being able to restrain the radial expansion of the first part (5), the apparent modulus of elasticity of said second element (6) being greater than 45 000 Mega Pascal, characterized by the fact that said second element (6) is a continuous ring, separate from the first part (5), and whose axial width, in mounted position, is less than the maximum axial width of the first part, and by the fact that the first part (5) has a transverse slit.

2. A device according to claim 1, characterized by the fact that the first part has a meridian cross section of U shape, each of whose radially outwardly extending axial ends axially retains a bead of the tire.

3. A device according to claims 1 and 2, characterized by the fact that the first part comprises at least two pieces.

4. A device according to one of the claims 1 to 3, characterized by the fact that the second element (6) is a thin strip which is wound in several turns and maintained wound.

5. A device according to claim 4, characterized by the fact that the thin strip is maintained wound by at least one hooping.

6. A device according to one of claims 1 to 5, characterized by the fact that the first part (5) is formed essentially of a material of a Shore A hardness of less than 70.

7. A device according to one of claims 1 to 6, characterized by the fact that the first part (5) is formed essentially of a material of a Shore A hardness of between 50 and 65.

EP 0 146 776 B1

FIG.1

FIG.2

# FIG.3